# EUROPEAN PATENT SPECIFICATION

(11) **EP 2 645 486 B1**
(45) Date of publication and mention of the grant of the patent: **19.03.2014**
(21) Application number: 12460012.3
(22) Date of filing: 29.03.2012
(51) Int. Cl.: H01R 9/26

(54) **A pole connector for in-series circuit breakers**
Polverbinder für in Reihe geschaltete Schutzschalter
Connecteur de pôle pour disjoncteurs en séries

(43) Date of publication of application: 02.10.2013
(73) Proprietor: ABB Technology AG, 8050 Zürich (CH)
(72) Inventor: Ludowski, Pawel, 31-411 Krakow (PL); Scholz, Dirk, 8153 Rumlang (CH)
(74) Representative: Chochorowska-Winiarska, Krystyna

(56) References cited:
- EP-A1- 1 326 262
- EP-A1- 2 280 460
- KR-B1- 101 055 657
- US-B1- 6 666 713
- ANONYMOUS: "ABB: S800PV - The High Performance MCB", INTERNET CITATION, 13 November 2008 (2008-11-13), pages 1-34, XP002603278, Retrieved from the Internet: URL:http://www05.abb.com/global/scot/scot2 09.nsf/veritydisplay/87291f85795c7423c1257 5010058f1e2/$File/2CCC413002C0202_S800PV_E nglisch.pdf [retrieved on 2010-10-01]

## Description

The invention relates to a pole connector for in-series circuit breakers, and in particular Miniature Circuit Breakers (MCB) installed alongside each other on a busbar. In particular, the connector is suitable for use with circuit breakers of rated current in excess of 50A, used in photovoltaic equipment.
Circuit breakers used to protect photovoltaic equipment are exposed to high ambient temperatures during operation and they have to be resistant to high temperatures of up to 50 degrees centigrade. Circuit breakers which protect a photovoltaic panel are connected in twos in series and they are located before the photovoltaic panel and after it in the electric circuit. If circuit breakers of the upper range of rated currents are used, and in particular a circuit breaker of a rated current of 125 A, roughly 50% of heat generated by the flow of current through it is dispersed through conductors connected to each individual circuit breaker, i.e. the incoming and outgoing leads. By eliminating incoming conductors located in the upper part of the circuit breaker and replacing them with a short section of a conductor in the form of an electric connector, the possibility to carry away heat generated in the circuit breaker is eliminated which results in overheating the circuit breaker. In increased ambient temperature conditions that occur in the areas of application of photovoltaic equipment, the increased amount of heat generated in circuit breakers often leads to a considerable increase in temperature in the box in which they have been installed and consequently to fire.
The purpose of the invention is to design a new connector which, in addition to the ability to conduct current of intensity exceeding 50 A, and especially of 125 A, will be able to carry away heat generated by the flow of current through the connector and a part of heat generated by the flow of current through two MCBs connected in series.

At present, on the market there is available a pole connector offered by ABB under catalogue number 2CCS800900R0411, EAN No. 7612271211295 marked as S802-LINK50. The connector is a rectangular copper plate which is provided with two flat conducting terminals protruding above the plate, which are situated along the longer axis of the plate or parallel to that axis, the distance between the conducting terminals depending on the type of the circuit breakers that are to be electrically connected in pairs with each other, and corresponding to the distance between the circuit breaker terminals located in the cable holes of each MCB pair connected in series and situated on a common conducting bus. The connector terminals, after being placed in the circuit breaker cable hole, are connected with the circuit breaker terminals by means of press bolts or set screws. The copper plate protruding above the openings of the interconnected circuit breakers is covered by an insulating cover that covers the cable holes of the connected circuit breakers. The cover is made of plastic and its function is to electrically insulate the circuit breaker connectors. The S802-LINK50 connector allows the flow of maximum current of 50A which is limited by the ability of the connector to dissipate heat.
In its catalogue materials, Schneider Electric describes a connector used to connect two in-series circuit breakers, and in particular overcurrent circuit breakers. The connector consists of a rectangular conducting plate provided with a rectangular recess situated centrally in the plate plane on one of the longer sides of the plate, whose depth depends on the level of location of the breaker terminal in the cable hole of the circuit breaker. Elements of the conducting plate situated at both sides of the recess are parallel to one another and they make the connector terminals which are connected with the circuit breaker terminals, after the terminals have been placed in the cable holes of the circuit breakers that are to be connected with each other. Each terminal has an opening for a screw or bolt fixing the conducting plate to the circuit breaker terminals. A metal radiator in the form of a plate with protruding ribs parallel to one another and located on one of the flat surfaces of the plate, which ribs are grouped on the sides of the plate on the left and on the right, is attached to one of the flat surfaces of the plate. The central surface of the plate between the ribs on the left and right has suitable openings for placing in them bolts or screws that fix the radiator to the surface of the conducting plate of the connector. The connector terminals are placed in the cable holes of the circuit breaker in such way that the radiator ribs are in the upper and bottom part of the circuit breaker, on the same side as the lever used to change the operating status of the circuit breaker. A disadvantage of this connector is the lack of any electric insulation, which necessitates the use of an additional cover made of insulating material on the connector, which worsens the ability of the device to carry heat away.

The pole connector for a set of in-series circuit breakers mounted on a bus bar comprises a conducting plate with conducting terminals and a radiator for conducting heat from the circuit breaker terminals and from the conducting plate of the connector. The connector according to the invention is characterized by the radiator which is a coat of a polymer material of thermal conductivity of more than 3 W/(m·K) and of dielectric strength of at least 10 kV/mm, covering the whole surface of the conducting plate except the terminals. The coat comprises an internal layer closely sticking to both flat surfaces of the conducting plate and an external layer with a ribbing that is integrally bound with the coat. The ribbing is arranged on both sides of the conducting plate, perpendicularly to the flat surface of the plate. The ribbings on both sides of the plate differ in length, Sa and Sb respectively.. The ribs of the bigger length Sb are located on the front wall of the connector. The polymer coat is made as one indivisible element permanently fixed to the conducting plate, or it is made of two separate parts which are permanently connected with each other and with the plate.

Preferably, the ribs of the lesser length Sa are arranged on the back of the conducting plate and they contain a smaller number of individual ribs, and they are grouped in pairs between which there is free space for exhaust gases to escape from individual circuit breakers, after the connectors have been installed on the circuit breaker set.

Preferably, the connector ribbing has the form of vertical ribs situated parallel to one another on each side of the conducting plate.

Preferably, a framing comprising a cover constituting an integral part of the coat is connected to the ends of the extreme ribs of the bigger length Sb, on the terminal side. The cover has a flat bottom which connects the ribs on the bottom part of the connector, to which bottom there are connected flat elements having the shape of semicircles which are situated parallel to the surface of the conducting plate on the front side of the connector.

Alternatively, the ribbing of the bigger width Sb is made of irregular elements which in outline, on the front side of the connector, have a shape similar to the cross-section of the walls of a goblet whose bottom part is surrounded, on the outside of the goblet, by fragments of the parallel bottom walls of the goblet, a longitudinal partition is located in the longitudinal axis of the goblet, and in the upper part of the goblet between the longitudinal partition and the goblet walls there are located side partitions. The bottom of the goblet is situated on the same side as the connector terminals or on the other side.

A set of circuit breakers for mounting on a busbar comprises at least one pair of circuit breakers electrically connected with each other by means of a connector for in-series circuit breakers, in which individual circuit breakers have cable holes in which terminals to be connected with the connector are placed. Each circuit breaker has a front side with an "ON" and "OFF" status switch and a back side situated parallel to the front side. The circuit breaker set according to the invention is characterized by the fact that the connector is made according to any of the claims 1 through 4, and the back side of the connector comprises a ribbing situated on the back side of the circuit breakers and it has free spaces between the ribs of the ribbing, whose function is to let out gases from the circuit breakers if a short circuit occurs in the circuit breakers.

The connector according to the invention is characterized by simple design and small dimensions, which permits to use the connector in circuit breaker sets used in standard connection boxes. The connector has remarkably high ability to dissipate heat by natural convection and it is excellently suitable for applications in photovoltaic equipment. At the same time the connector is distinguished by dielectric strength, which makes it safe and eliminates electric shock hazard even if it is touched. An additional advantage is its resistance to the harmful effect of gases blown out from the arc chamber, produced by the arc generated while disconnecting fault current in the MCB. Another advantage of the connector is the simple process of its production.

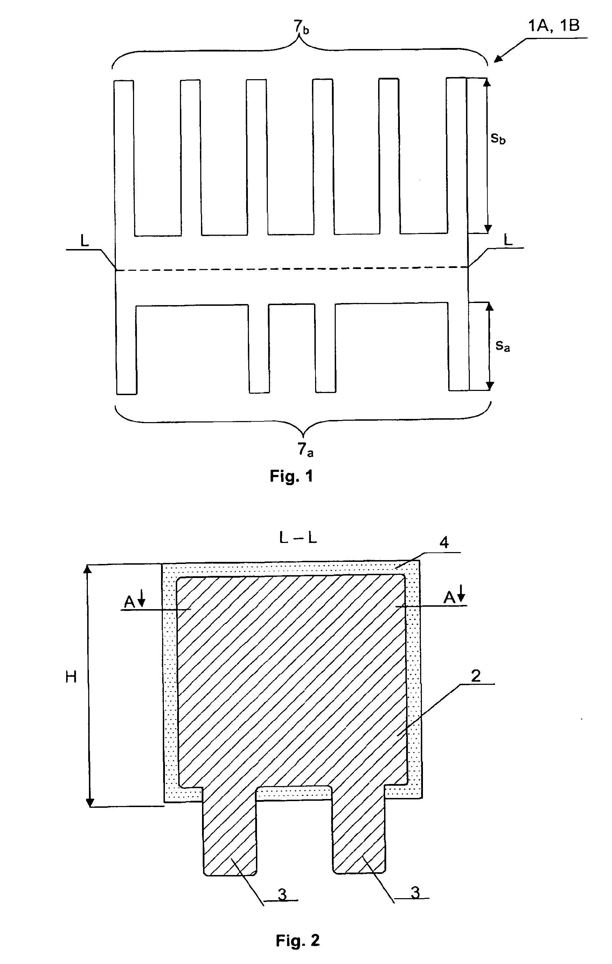

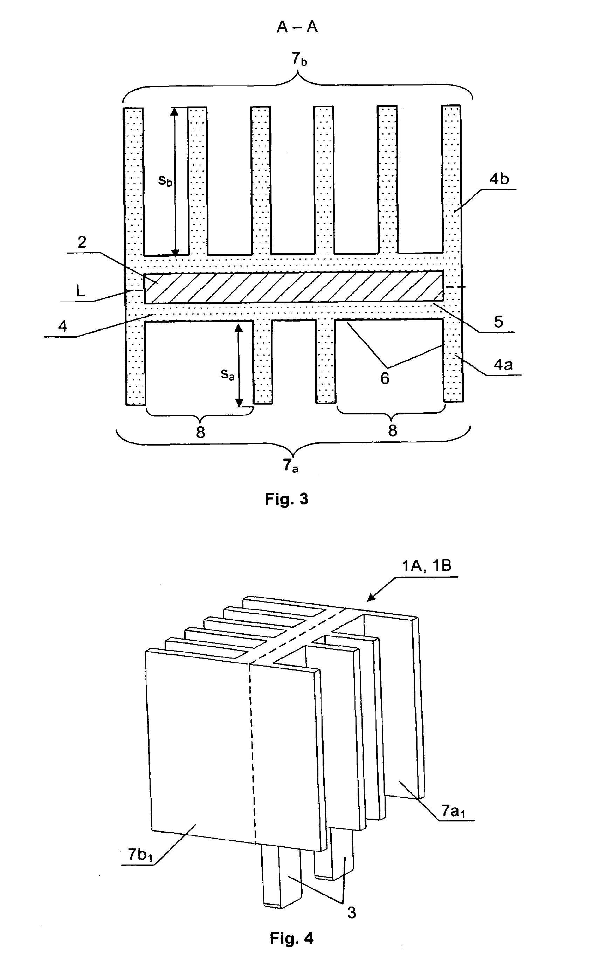

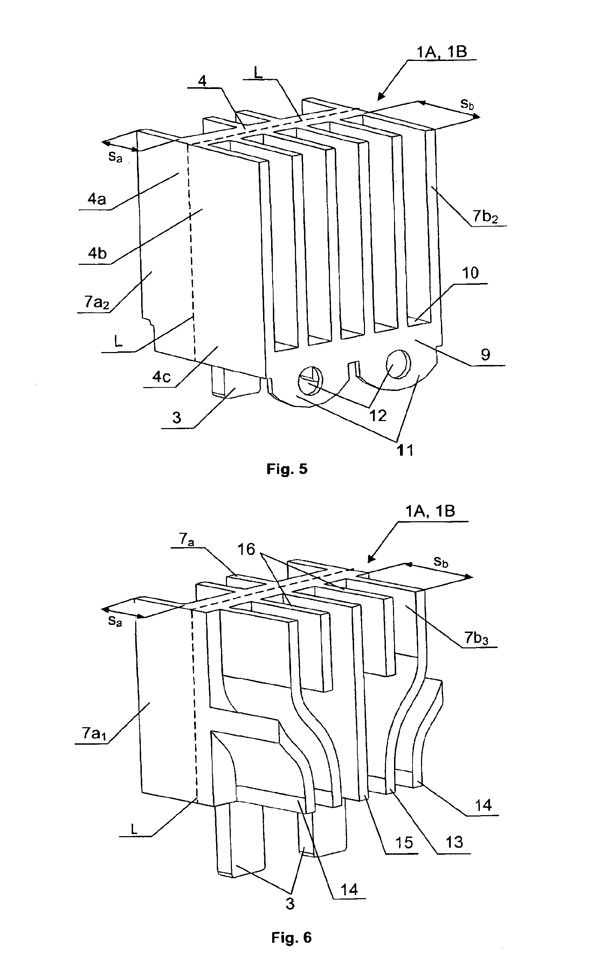

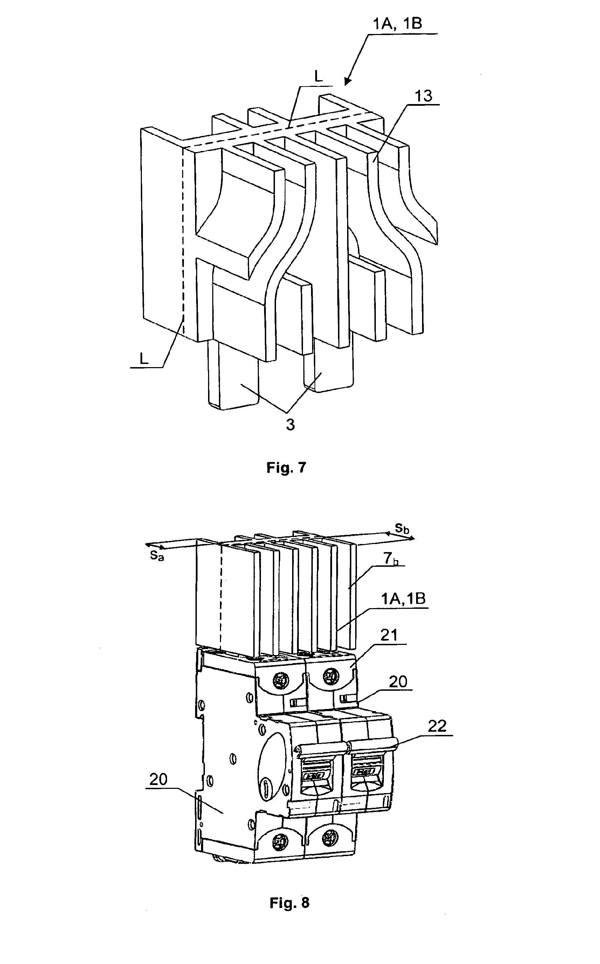

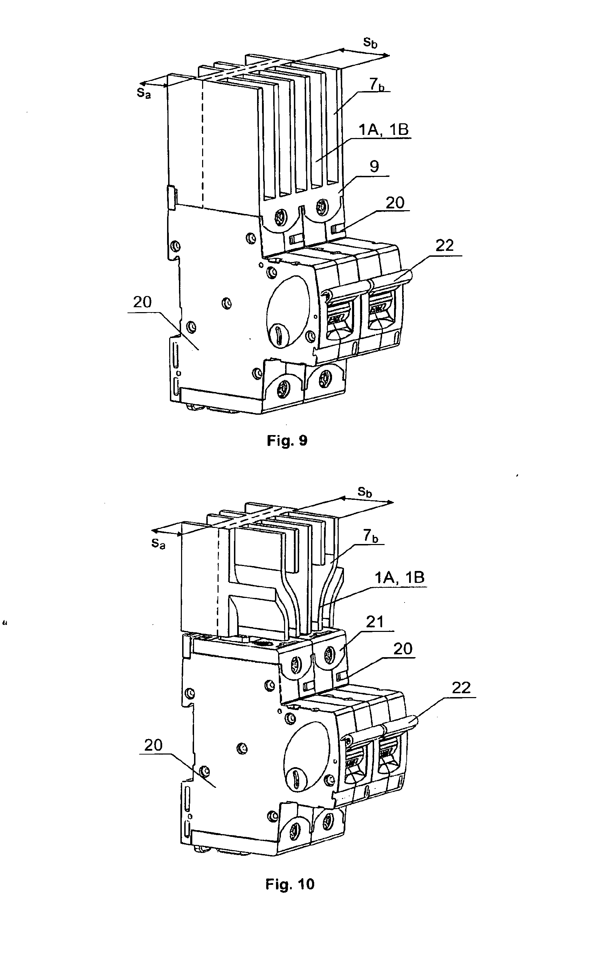

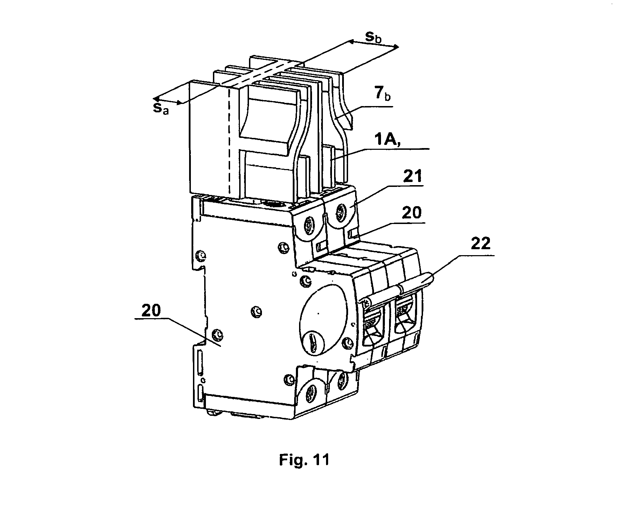

The invention is presented as an embodiment in the drawing where fig. 1 shows the connector in top view, fig. 2 - a section through the connector from fig. 1 along the dashed line "L", fig. 3 - a cross section of the connector from fig. 2 along line A-A, fig. 4 - the connector in the first variety of the embodiment for the first version and for the second version of the invention embodiment in axonometric projection, fig. 5 - the connector in the second variety of the embodiment for the first version and for the second version of the invention embodiment in axonometric projection, fig. 6 - the connector in the third variety of the embodiment for the first version and for the second version of the invention embodiment in axonometric projection, fig. 7 - the connector in the fourth variety of the embodiment for the first version and for the second version of the invention embodiment in axonometric projection, fig. 8 - a set of circuit breakers with the connector made according to the first variety of the invention embodiment in an axonometric projection, fig. 9 - a set of circuit breakers with the connector made according to the second variety of the invention embodiment in an axonometric projection, fig. 10 - a set of circuit breakers with the connector made according to the third variety of the invention embodiment in an axonometric projection, and fig.11 - a set of circuit breakers with the connector made according to the fourth variety of the invention embodiment in an axonometric projection.
The invention is shown in two embodiment versions A and B, which differ from each other in the connector manufacturing technology, and each version is made also in several invention varieties. In version A, the connector is made in the injection molding process during one casting operation in a suitable mold. In version B, the connector is produced in a complex injection molding process in which separate molded pieces are obtained which require another operation to join them into one whole. In the drawing, the dashed line L denotes the division of the connector for version B of the invention, and the fragments of the connector above and under the line denote separate molded pieces after they have been joined. There is no such line for version A.
In both versions A and B of the invention embodiment, the pole connector 1 A or 1 B for in-series circuit breakers mounted on a busbar comprises a rectangular conducting metal plate 2 with rectangular conducting terminals 3 constituting an integral part of the plate 2, formed by cutting out a rectangular plane situated centrally on the longer side of the plate 2 from the plate 2, and by cutting out rectangular corners on the same longer side of the plate 2. The conducting plate 2 and the terminals 3 are preferably made of copper. The shape and the dimensions of the terminals 3 fit the shape and dimensions of the cable holes made in the circuit breakers that are being connected with each other. The conducting plate 2 is located in an electrically insulating coat 4 made of a polymer material of heat conductivity exceeding 3W/(m·K) and of dielectric strength of at least 10 kV/mm whose internal walls 5 stick tightly to the whole surface of the plate 2 with the exception of the surface of the terminals 3. The external walls 6 of a casing on both sides of the flat surfaces of the plate 2 are provided with a ribbing 7a of a length of Sa, measured in the direction perpendicular to the surface of the plate 2, and with a ribbing 7b of a length of Sb, measured in the direction perpendicular to the surface of the plate 2, which are situated on the other side of the plate 2. The ribbings 7a and 7b are integrated with the coat 4 and they constitute a radiator for conducting heat from the terminals of the circuit breaker and from the conducting plate of the connector. The individual ribs of each ribbing extend along the height H of the plate 2. The number of individual ribs in the ribbings 7a and 7b is different, the number of ribs in the ribbing 7a, of a length of Sa, being less than the number of ribs in the ribbing 7b, of a length of Sb. The individual ribs in the ribbing 7a are so situated that between them there are free spaces 8 which, when the connector is mounted on the circuit breaker, do not obstruct flow of exhaust gases from the circuit breaker during its operation.

In the first version A of the invention embodiment, i.e. for the connector 1A, the coat 4 is made as a whole e.g. by injection molding around the conducting plate 2 in a suitable mold.

In the second version B of the invention embodiment, i.e. for the connector 1 B, the coat 4 is made of two separate moldings 4a and 4b, between which there is inserted the conducting plate 2 whose terminals 3 protrude outside both moldings 4a and 4b, and the material of the moldings surrounds the whole plate 2. In such case the surfaces of the plate 2 stick tightly to the internal surfaces of the moldings and they are permanently joined with each other, for instance by means of glue. In the drawing, the division of the coat 4 into elements 4a and 4b is schematically marked by dashed line L.

The two versions of the invention embodiment differ little from each other as regards their design, and the basic difference between them is the way of fixing the coat 4 on the conducting plate 2.
In the first variety of both versions of the invention embodiment, the connector 1A, 1 B comprises the ribbings 7a and 7b which are made in the form of vertical ribs 7a₁, 7b₁ respectively, situated parallel to each other on each side of the flat conducting plate 2.
In the second variety of both versions of the embodiment, the connector 1A, 1 B comprises the ribbings 7a and 7b, which are made in the form of vertical ribs 7a₂, 7b₂ respectively, situated parallel to each other on each side of the flat conducting plate 2. The coat 4, on the side of the terminals 3, is formed in such way that its bottom fragment is formed by the framing 4c surrounding the bottom contour of the connector and open on the rear side of the connector. The framing 4c is integrated with the coat 4 and it contains an external transverse shield 9, parallel to the surface of the plate 2, which is fixed to the bottom ends of the vertical ribs 7b₂ and to a bottom wall 10 which closes the space between the ribs 7b₂ on their bottom side. Both the external shield 9 and the wall 10 are integrated with the insulating coat 4 or 4b. The shield 9 is made of flat semicircles 11 fixed to the framing 4c on the front side of the connector, which front side, when the connector is mounted on the circuit breaker, is situated on this side of the circuit breaker on which the "ON" / "OFF" switch is located. In the semicircles 11 there are holes 12 for tightening the bolts of the cable terminals of the circuit breaker. The shape of the shield 9 is adjusted to the circuit breaker design, so that after the installation of the connector on the circuit breakers, the shield covers the space under the connector including the upper parts of two neighboring circuit breakers.
In the third variety of both versions of the invention embodiment, the connector 1A, 1 B comprises the ribbings 7a and 7b which are made as follows. The ribbing 7a is made in the form of vertical ribs 7a₁ or 7a₂ i.e. as in the first and second varieties of the invention embodiment. The ribbing 7b is made in the form of irregular ribs 7b₃ which in their outline, on the front side of the connector, have a shape similar to the cross-section of the walls of a goblet 13, whose bottom part is surrounded, on the outside of the goblet, by fragments of the parallel bottom walls of the goblet 14. A longitudinal partition 15 is located in the longitudinal axis of the goblet, and in the upper part of the goblet, between the longitudinal partition 15 and the walls of the goblet 13, side partitions 16 are located. In this variety, the bottom of the goblet is situated on the same side of the connector on which the terminals 3 of the connector are located.
The fourth variety of both versions of the invention embodiment comprises the connector 1A, 1 B which has the same elements as the third variety, but the bottom of the goblet 13 is situated on the side of the connector opposite to that on which the terminals 3 of the connector are located.
The terminals 3 of the connector according to the invention are clamped in the cable holes of the circuit breakers 20, so that one connector terminal is clamped in the cable hole of one circuit breaker, and the second connector terminal is clamped in the second cable hole of the second circuit breaker, which gives an electric coupling in series between the circuit breakers 20. Depending on the type of the connector used and the circuit breakers which may comprise or not insulating covers 21 located on their upper parts, various practical sets of circuit breakers are obtained which are ready for installation on the busbar in the connection box of a piece of electric equipment protected by such sets. The connectors according to the invention are placed in a single set in such way that the front wall of the connector, comprising the ribbing 7b, that is the ribbing of the bigger length Sb, is situated on the front side of both circuit breakers, comprising the "ON" / "OFF" switch marked as 22. The rear wall of the connector, comprising the ribbing of the lesser length Sa, is situated on the rear sides of the two circuit breakers. S
Examples of circuit breaker sets for installation on a bus are shown in fig. 8-11.
The set in fig. 8 comprises two circuit breakers 20 coupled with a connector 1A or 1 B, the dashed line on the connector meaning that a connector made according to version A or version B is used. In the presented set, the circuit breakers 20 are provided with insulating covers 21 located on the front walls of the circuit breakers comprising operating status switches 22. In this case, between the lower part of the connector and the upper walls of the circuit breakers there is an air gap situated around the lower part of the connector. In the insulating covers there are holes through which a set screw is inserted which fixes the terminals 3 to the terminals of the circuit breakers which are not shown in the drawing.
The set in fig. 9 comprises two circuit breakers 20 coupled by means of a connector 1A or 1 B, the dashed line on the connector meaning that a connector made according to version A or version B is used. In this combination, the circuit breakers 20 lack the insulating covers 21, because their function is performed by the shield 9 and the framing 4c of the connector made according to the third variety of the invention embodiment.
The sets shown in fig. 10 and fig. 11 comprise two circuit breakers 20 coupled with each other by means of the connector 1A or 1 B which is made according to the third and fourth variety of the invention embodiment, and the circuit breakers 20 lack the insulating covers 21.

## Claims

1. A pole connector (1A, 1 B) for a set of in-series circuit breakers mounted on a bus bar, comprising a conducting plate (2) with conducting terminals (3) shaped by cutting out a suitable shape in the plate (2) and provided with a radiator for carrying away heat from the circuit breaker terminals and from the conducting plate of the connector, **characterized in that** the radiator is an electrically insulating coat (4, 4a,4b) made of a polymer material of thermal conductivity exceeding 3 W/(m·K) and of dielectric strength of at least 10 kV/mm, covering the whole surface of the conducting plate (2) except the terminals (3), comprising an external layer (5) tightly sticking to both flat surfaces of the conducting plate (2) and an external layer (6) with a ribbing (7a, 7b) integrally bound with the coat (4), arranged on both sides of the conducting plate (2) perpendicularly to the flat surface of the plate (2), the ribbings on the two sides of the plate differing in length (Sa, Sb) respectively, and the ribs of the bigger length (Sb) being located on the front wall of the connector, and the coat (4) being made as one indivisible element permanently fixed to the plate (2) or being made of two separate parts (4a, 4b) permanently connected with each other and with the plate (2).

2. A connector according to claim 1, **characterized in that** the ribs of the lesser length (Sa) being arranged on the back of the conducting plate (2) and comprising a smaller number of individual ribs and being grouped in pairs between which a free space (8) is formed for exhaust gases to escape from individual circuit breakers, after the connectors (1A, 1 B) have been installed on the circuit breaker set.

3. A connector according to claim 1, **characterized in that** the ribbings (7a) and (7b) have the form of vertical ribs (7a₁, 7b₁) respectively, situated parallel to one another on each side of the conducting plate (2).

4. A connector according to claim 3, **characterized in that** to the ends of the extreme ribs of the bigger length (Sb), on the side of the terminals (4) there is connected a framing (4c) comprising an external crosswise shield (9) constituting an integral part of the coat (4, 4a, 4b) which has a bottom wall (10) which connects ribs (7b₂) on the bottom part of the connector, to which there are connected flat elements (11) having the shape of semicircles which are situated parallel to the surface of the plate (2) on the front side of the connector.

5. A connector according to claim 1, **characterized in that** the ribbing (7b) of the bigger length (Sb) is made of irregular elements which in outline, on the front side of the connector, have a shape similar to the cross-section of the walls of a goblet (13) whose bottom part is surrounded, on the outside of the goblet, by fragments of the parallel bottom walls of the goblet (14), a longitudinal partition (15) is located in the longitudinal axis of the goblet, and in the upper part of the goblet between the longitudinal partition (15) and the goblet walls (14) there are located side partitions (16), the bottom of the goblet (13) being situated on the same side as the terminals (3) of the plate (2) or on the other side.

6. A set of connectors for mounting on a busbar, comprising at least one pair of circuit breakers (20) electrically connected with each other by means of a connector for in-series circuit breakers, in which individual circuit breakers (20) have cable holes in which terminals for connecting with the connector are located, and each circuit breaker has a front side with an "ON" / "OFF" status switch (22) and a rear side situated parallel to the front side, **characterized in that** the connector is made according to any of the claims 1-5, and the rear side of the connector comprising the ribbing (7a) is situated on the rear side of the circuit breakers and it has free spaces (8) between the ribs of the ribbing (7a) intended for letting out gases from the circuit breakers if a short circuit occurs in the circuit breakers.

## Patentansprüche

1. Ein Polverbinder (1A, 1 B) für in Reihe geschaltete Schutzschalter, die auf einer Sammelschiene montiert sind, welcher eine Leiterplatte (2) mit Anschlussklemmen (3) enthält, die durch einen entsprechenden Ausschnitt der Platte gebildet werden und mit einem Radiator ausgestattet sind, der dazu dient, Hitze von den Schutzschalteranschlüssen und von der Leiterplatte auf dem Polenverbinder abzuleiten, **dadurch gekennzeichnet, dass** der Radiator ein elektrisch isolierender Überzug (4, 4a, 4b) ist, der aus polymerem Material mit einer thermischen Leitfähigkeit von mehr als 3 W/(m·K) und einer Durchschlagsfestigkeit von wenigstens 10 kV/mm hergestellt ist und der die gesamte Oberfläche der Leiterplatte (2), ausgenommen die Anschlussklemmen (3), bedeckt und der eine äußere Schicht (5) enthält, die an den beiden flachen Oberflächen der Leiterplatte (2) fest haftet, und eine äußere Schicht (6) mit einer Verrippung (7a, 7b) enthält, die untrennbar mit dem Überzug (4) verbunden ist und auf beiden Seiten der Leiterplatte (2) senkrecht zu den flachen Oberflächen der Leiterplatte (2) angeordnet ist, wobei sich die Verrippung auf beiden Seiten der Leiterplatte (2) in ihrer jeweiligen Länge (Sa, Sb) unterscheidet und die Rippen mit der größeren Länge (Sb) auf der Vorderseite des Verbinders angeordnet sind und der Überzug (4) als ein unteilbares Element, das dauerhaft an der Leiterplatte (2) befestigt ist, hergestellt ist oder aus zwei separaten Teilen (4a, 4b), die dauerhaft miteinander und mit der Leiterplatte (2) verbunden sind, besteht.

2. Ein Verbinder gemäß Anspruch 1, **dadurch gekennzeichnet, dass** die Rippen mit der geringeren Länge (Sa) auf der Rückseite der Leiterplatte (2) angeordnet sind und eine kleinere Zahl von einzelnen Rippen enthalten und jeweils in Paaren angeordnet sind, zwischen denen ein Zwischenraum (8) belassen wurde, um das Entweichen von Abgasen aus den einzelnen Schutzschaltern zu ermöglichen, nachdem die Verbinder (1A, 1 B) auf der Schutzschaltereinrichtung installiert wurden.

3. Ein Verbinder gemäß Anspruch 1, **dadurch gekennzeichnet, dass** die Verrippung (7a) und (7b) jeweils die Form von senkrechten Rippen (7a, 7b) hat, die parallel zueinander auf jeder Seite der Leiterplatte (2) angeordnet sind.

4. Ein Verbinder gemäß Anspruch 3, **dadurch gekennzeichnet, dass** an die Endstücke der äußersten Rippen mit der größeren Länge (Sb) auf der Seite der Anschlüsse (4) ein Rahmen (4c) angeschlossen ist, der eine äußere quer verlaufende Abschirmung (9) enthält, die einen integralen Teil des Überzugs (4, 4a, 4b) bildet und die eine untere Wand (10) hat, die Rippen (7b₂) auf dem unteren Teil des Verbinders miteinander verbindet, an den flache Elemente (11) angebunden sind, die die Form von Halbkreisen haben und die parallel zur Oberfläche der Leiterplatte (2) auf der Vorderseite des Verbinders angeordnet sind.

5. Ein Verbinder gemäß Anspruch 1, **dadurch gekennzeichnet, dass** die Verrippung mit der größeren Länge (Sb) aus unregelmäßigen Elementen gefertigt ist, die im Umriss, auf der Vorderseite des Verbinders, eine Form haben, die dem Querschnitt der Wände eines Kelches (13) entspricht, dessen unterer Teil, auf der Außenseite des Kelches, von Fragmenten der parallelen unteren Wände des Kelches (14) umgeben ist, und in der Längsachse des Kelches eine längst verlaufende Trennwand (15) angeordnet ist sowie im oberen Teil des Kelches zwischen der längs verlaufenden Trennwand (15) und den Wänden des Kelches (14) seitliche Trennwände (16) angeordnet sind, wobei der Boden des Kelches (13) auf der gleichen Seite wie die Anschlussklemmen (3) der Leiterplatte oder auf der Gegenseite angeordnet ist.

6. Ein Satz von Verbindern zur Montage auf einer Sammelschiene, die wenigstens ein Paar von Schutzschaltern (20) enthält, die elektrisch mit Hilfe eines Polverbinders für in Reihe geschaltete Schutzschalter miteinander verbunden sind, wobei die einzelnen Schutzschalter (20) mit Kabelöffnungen versehen sind, in denen Klemmen zur Verbindung mit dem Verbinder angeordnet sind, und jeder Schutzschalter eine Vorderseite mit einem Arbeitsschalter (22) mit "ON"/"OFF"-Anzeige und eine Rückseite parallel zur Vorderseite besitzt, **dadurch gekennzeichnet, dass** der Verbinder gemäß einem der Ansprüche 1 - 5 hergestellt ist und die Rückseite des Verbinders, die die Verrippung (7a) aufweist, auf der Rückseite der Schutzschalter angeordnet ist und Zwischenräume (8) zwischen den Rippen der Verrippung (7a) besitzt, dazu bestimmt, Gase aus den Schutzschaltern herauszulassen, falls ein Kurzschluss in den Schutzschaltern auftritt.

## Revendications

1. Connecteur (1A, 1 B) de pôle pour disjoncteurs en séries installé sur un bus connecteur comprenant une plaque conductrice (2) avec des pattes conductrices (3) façonnées par une forme appropriée de la plaque (2) et munie d'un radiateur servant à évacuer la chaleur des bornes des disjoncteurs ainsi que de la plaque conductrice du connecteur, **caractérisé en ce que** le radiateur est un revêtement électriquement isolant (4, 4a, 4b) fait d'un matériau de polymère d'une conductivité thermique supérieure à 3 W/(m·K) et d'une résistance diélectrique d'au moins 10 kV/mm, recouvrant intégralement la surface de la plaque conductrice (2) à l'exception des pattes (3), comprenant une couche intérieure (5) adhérant étroitement aux deux surfaces plates de la plaque conductrice (2) et une couche extérieure (6) avec des arêtes (7a, 7b) liées intégralement avec le revêtement (4), réparties sur les deux côtés de la plaque conductrice (2) perpendiculairement à la surface plate de la plaque (2), étant entendue que les arêtes de deux côtés de la plaque se diffèrent de façon appropriée entre elles par leur longueur (Sa, Sb), les arêtes plus longues (Sb) étant situées sur la face de devant du connecteur, étant entendu que le revêtement (4) est exécuté comme un seul élément indivisible fixé à la plaque (2) de façon permanente ou réalisé de deux parties indépendantes (4a, 4b) qui sont fixées de façon permanente entre elles et avec la plaque (2).

2. Connecteur selon la revendication 1, **caractérisé en ce que** les arêtes plus courtes (Sa), réparties sur la face de derrière de la plaque (2), ont un nombre moins important d'arêtes individuelles et sont groupées en paires entre lesquelles il y a un espace libre (8) pour l'évacuation des gaz d'échappement de chaque disjoncteur particulier après l'installation des connecteurs (1A, 1 B) sur le lot de disjoncteurs.

3. Connecteur selon la revendication 1, **caractérisé en ce que** les arêtes (7a, 7b) ont la forme des arêtes (7a, 7b) verticales de façon appropriée, réparties parallèlement les unes aux autres des deux côtés de la plaque conductrice (2).

4. Connecteur selon la revendication 3, **caractérisé en ce que**, du côté des pattes (4), aux extrémités des arêtes terminales plus longues (Sb) est connecté un cadre (4c) comprenant une enveloppe extérieure verticale (9) constituant une partie intégrale du revêtement (4, 4a, 4b), dont la face inférieure (10) connectant les arêtes (7b₂) a, côté inférieur du connecteur auquel sont connectés les éléments plats (11), une forme de demi-cercles situés parallèlement à la surface de la plaque (2) du côté de la face de devant du connecteur.

5. Connecteur selon la revendication 1, **caractérisé en ce que** les arêtes (7b) plus longues (Sb) sont faites des éléments irréguliers dont la forme dans son contour du côté face du connecteur est similaire à la section transversale d'un gobelet (13) dont la partie inférieure est enveloppée du côté extérieur du gobelet par des fragments des faces parallèles inférieures du gobelet (14), sur l'axe longitudinal du gobelet est située une cloison longitudinale (15), et dans la partie supérieure du gobelet, entre la cloison (15) et les parois du gobelet (14) sont situées des cloisons latérales (16), étant entendu que la partie basse du gobelet (13) est située du même côté que les pattes (3) de la plaque (2) ou du côté opposé.

6. Le lot de connecteurs sur un bus connecteur comprenant au moins une paire de disjoncteurs (20) connectés entre eux électriquement à l'aide d'un connecteur de pôle pour disjoncteurs en séries où chaque disjoncteur individuel (20) a des orifices pour les câbles dans lesquels sont installées des bornes servant à connecter le connecteur et chacun des disjoncteurs possède une face de devant avec un commutateur (22) "ON" et "OFF" et une face de derrière située parallèlement à la face de devant, **caractérisé en ce que** le connecteur est exécuté selon une quelconque des revendications de 1 au 5, et la face de derrière du connecteur, comprenant les arêtes (7a) est située du côté de derrière des disjoncteurs et a les espaces libres (8) entre les arêtes (7a) destinés à évacuer les gaz des disjoncteurs en cas de survenance d'un court-circuit dans les disjoncteurs.
